# EUROPEAN PATENT SPECIFICATION

(11) **EP 3 065 581 B1**
(45) Date of publication and mention of the grant of the patent: **27.03.2019**
(21) Application number: 14844999.4
(22) Date of filing: 05.11.2014
(51) Int. Cl.: A24F 47/00

(54) **ELECTRONIC CIGARETTE WITH OVERHEATING PROTECTION**
ELEKTRONISCHE ZIGARETTE MIT ÜBERHITZUNGSSCHUTZ
CIGARETTE ÉLECTRONIQUE AVEC PROTECTION CONTRE LA SURCHAUFFE

(30) Priority: 06.11.2013 US 201361900598 P
(43) Date of publication of application: 14.09.2016
(73) Proprietor: Nu Mark Innovations Ltd, 99000 Beit Shemesh (IL)
(72) Inventor: COHEN, Shai, 9743614 Jerusalem (IL); GAVRIELOV, Shmuel, 99000 Beit Shemesh (IL); MALAMUD, Alex, 9747133 Jerusalem (IL)
(74) Representative: Docherty, Andrew John
(86) International application number: PCT/IB2014/003007
(87) International publication number: WO 2015/068044

(56) References cited:
- WO-A1-2013/034459
- WO-A2-2013/098398

## Description

### BACKGROUND

An electronic cigarette ("e-cigarette" or "e-Cig") is a device that emulates tobacco cigarette smoking, by producing smoke replacement that may be similar in its physical sensation, general appearance, and sometimes flavor (i.e., with tobacco fragrance, menthol taste, added nicotine etc). A battery portion of the e-Cig includes a controller and battery for powering the device, and a cartomizer portion of the e-Cig generates an aerosol mist (i.e. e- smoke or vapor) that is a replacement for cigarette smoke. In particular, the cartomizer may use heat, ultrasonic energy, or other means to aerosolize/vaporize an "e-Liquid" solution (e.g. based on propylene glycol, or glycerin, for example including taste and fragrance ingredients) into an aerosol mist. The aerosolization may be similar to nebulizer or humidifier vaporizing solutions for inhalation. The aerosolization may be caused by a heating element that heats the e-Liquid to generate the mist/vapor/e-smoke. The heating element may become quite hot in order to properly heat the e-Liquid and depending on the duration of usage of the e-Cig. Excessive heat within the e-Cig may cause burning of the internal components of the e-Cig and result in problems for the e-Cig user. WO 2013/034459 A1 discloses an apparatus comprising a heater configured to heat smokable material. The apparatus comprises a compressor to compress the smokable material while being heated. The compressor may be controlled in accordance with a threshold temperature. WO 2013/098398 discloses an aerosol-generating device which includes a heater for heating an aerosol-forming substrate, wherein the heater can be controlled to be below the release temperature of some volatile compounds within the aerosol-forming substrate.

### SUMMARY

Disclosed herein is an electronic cigarette which comprises a battery portion including a battery operable to power the electronic cigarette, and a cartridge coupled with the battery portion. The cartridge comprises a heating element that vaporizes a liquid, and a temperature sensor operable to measure a temperature within the electronic cigarette during operation thereof and prevent further operation of the electronic cigarette when the measured temperature exceeds a predetermined threshold. According to the invention, the temperature sensor includes a thermal fuse.

The battery portion comprises a controller, and a battery operable to power the electronic cigarette.

Further disclosed herein is a method for electronic cigarette operation. The method comprises monitoring an ambient temperature of the electronic cigarette, and switching off power to the electronic cigarette when the ambient temperature exceeds a predetermined threshold temperature.

Additionally disclosed herein is a method for electronic cigarette operation. The method comprises breaking a circuit of a thermal fuse within the electronic cigarette when an ambient temperature of the electronic cigarette exceeds a rated temperature of the thermal fuse.

### BRIEF DESCRIPTION OF THE DRAWINGS

The systems and methods disclosed herein may be better understood with reference to the following drawing and description. Non-limiting and non-exhaustive embodiments are described with reference to the following drawing. The components in the drawing are not necessarily to scale, emphasis instead being placed upon illustrating the principles of the embodiments as disclosed herein.

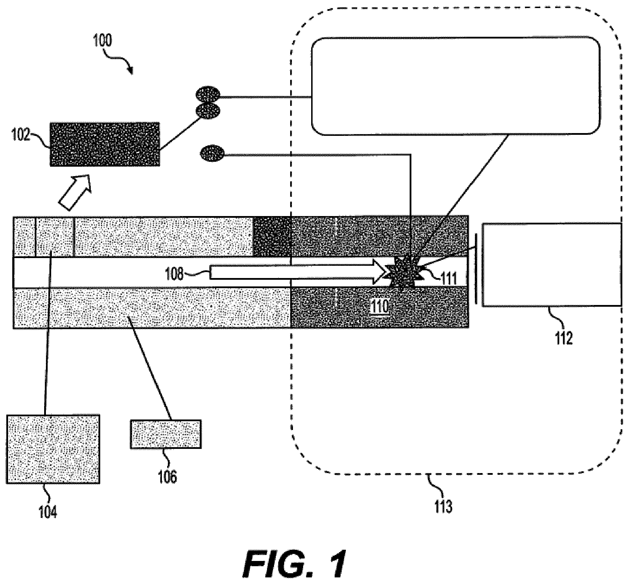

Figure 1 is a diagram of an electronic cigarette including a temperature sensor.

### DETAILED DESCRIPTION

By way of introduction, an e-Cig may include a temperature sensor coupled with or near a heating element operable to aerosolize e-Liquid. The temperature sensor of the e-Cig may shut down power to the e-Cig when an internal temperature exceeds a predetermined threshold. Depending on the temperature sensed by the temperature sensor, the shutdown may be temporary. In one embodiment, the sensor is a thermal fuse that triggers a switch to shut down power in the e-Cig when the temperature exceeds a predetermined threshold.

Other systems, methods, features and advantages will be, or will become, apparent to one with skill in the art upon examination of the following figure and detailed description. It is intended that all such additional systems, methods, features and advantages be included within this description, be within the scope of the embodiments disclosed herein, and be protected by the following claims. Nothing in this section should be taken as a limitation on those claims. Further aspects and advantages are discussed below.

Subject matter will now be described more fully hereinafter with reference to the accompanying drawings, which form a part hereof, and which show, by way of illustration, specific example embodiments. Subject matter may, however, be embodied in a variety of different forms and, therefore, covered or claimed subject matter is intended to be construed as not being limited to any example embodiments set forth herein; example embodiments arc provided merely to be illustrative. Likewise, a reasonably broad scope for claimed or covered subject matter is intended. Among other things, for example, subject matter may be embodied as methods, devices, components, and/or systems. Accordingly, embodiments may, for example, take the form of hardware, software, firmware or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of example embodiments in whole or in part.

In general, terminology may be understood at least in part from usage in context. For example, terms, such as "and", "or", or "and/or," as used herein may include a variety of meanings that may depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

Figure 1 is a diagram of an electronic cigarette 100 (i.e. e-Cig). The "smoke" (i.e. aerosol mist) produced by an e-Cig 100 is a created by turning an e-Liquid into mist and some vapor with an aerosol generating component 112. The e-Liquid may be stored in a liquid container. A cartomizer 113 may include the aerosol generating component 112 and the e-Liquid. The cartomizer 113 may also be referred to as a cartridge throughout this disclosure and may be disposable. A temperature sensor 110 is also part of the cartomizer 113 as well as a heating element 111. In one embodiment, the temperature sensor 110 comprises a thermal circuit breaker fuse that breaks a circuit within the cartomizer 113 when an ambient temperature within the e-Cig 100 exceeds a rated temperature of the fuse. The fuse (i.e. temperature sensor 110) is located adjacent the heating element 111 for a more accurate measurement of internal temperature of the e-Cig 100 and a quicker identification of a potential overheating issue. The e-Liquid can be aerosolized via air flow 108, generated by the inhalation of an individual (i.e. the smoker or consumer or vaper). In order to reduce the viscosity, to a level enabling aerosolization, external heat may be applied through the heating element 111, which may include a heating coil and a wick that is soaked in or includes a portion of the e-Liquid. In other words, the heating element 111 may be a coil in one embodiment that wraps around the wick in order to heat the e-Liquid on the wick. Local viscosity may be reduced via heating, while inhalation occurs, enabling aerosolization in the inhalation generated flow of air 108. The e-Liquid may be heated via an electric current flowing through the heating element 111 and may then be aerosolized and evaporated through the e-Cig and may contain tastes and aromas that create a smoking sensation.

A controller 102 may be activated due to air flow 108 (from the inhaled air) passing a flow sensor 104. The flow sensor 104 may be activated by a pressure drop across the flow sensor 104 and may directly switch the battery 106 power on, or be used as an input for the controller 102 that then switches the battery 106 current on. Although illustrated as separate from the e-Cig, the controller 102 may be a part of the e-Cig (e.g. along with the battery 106). The battery 106 may be a separate/removable assembly. The battery 106 may include one or more electronic chips controlling and communicating from it. It may connect with the cartomizer 113, which can be replaced or changed (e.g. when a new/different e-Liquid is desired).

The e-Cig 100 may include two parts. The first part is often just referred to as the battery or battery portion (i.e. battery enclosure) and it includes the battery 106, the air flow sensor 104, and the controller 102. The second part is the cartridge (i.e. cartomizer 113). The cartridge 113 includes the e-Liquid that is required for aerosol and flavor generation. The battery portion and the cartridge may be connected by metal connectors. An airflow tube of the battery enclosure and an airflow tube of the cartridge 113 may enable an individual to puff through the e-Cig 100 and activate the airflow sensor 104 inside the battery portion. This may trigger the controller 102 and cause the heating element 111 inside the cartridge 113 to get hot, evaporate the e-Liquid that is in the cartridge 113 and causes aerosol (i.e. vapor) to form. Although not shown in Figure 1, the e-Cig 100 may include connections (i.e. connectors or electrical connections) that are used for power delivery to the heating element 111 and for charging the battery 106.

The temperature sensor 110 may operate to shut down or shut off power delivery from the battery 106 when the heating element 111 begins to overheat. The shutdown may be the result of a broken circuit when the temperature sensor 110 comprises a thermal fuse. The thermal fuse may be one-time use in one embodiment, such that the entire cartridge 113 should be replaced if the thermal fuse is triggered and breaks the circuit within the e-Cig 100. Alternatively, the thermal fuse (i.e. temperature sensor 110) may be able to temporarily break the circuit at certain temperatures, but re-connect the circuit at normal temperature levels.

Alternatively, the controller 102 may be operable to receive a temperature measurement from the temperature sensor 110, and operable to control the power output from the battery 106 to the heating element 111 depending on the temperature measured by the temperature sensor 110. In one embodiment, there may be multiple levels of temperature measurement thresholds such that a lower threshold of temperature measurement may result in power being shut off for a short period of time (i.e. when the measured temperature reaches that threshold). A maximum temperature threshold level may result in permanent shut down of the power for that cartridge 113 if the internal measured temperature reaches that maximum temperature threshold level. For example, the controller 102 can have a maximum temperature threshold wherein the controller shuts off power when the measured temperature reaches the maximum temperature threshold, and the controller 102 can have a second temperature threshold which is lower than the maximum temperature threshold wherein the controller 102 temporarily shuts off the power when the measured temperature reaches the second temperature threshold. Preferably, the power is turned on when the measured temperature returns to a normal operating temperature or falls below the second temperature threshold.

The controller 102 of the e-Cig 100 may include a controller chip that connects the battery 106 to the heating coil 111 when an individual puffs (i.e. draws or inhales) on the e-Cig 100 and disconnects the battery 106 from the heating coil 106 when the individual stops inhaling (end of the "puff).

In some cases, there can be a failure (e.g. a short circuit in the switch) wherein the battery 106 gets stuck in the connected state, regardless of whether or not an individual is inhaling. When such a failure occurs, the temperature inside the e-Cig 100 starts rising and the e-Liquid eventually runs out, causing a rise in temperature inside the e-Cig 100. In e-Cigs with a plastic barrel, this may cause the plastic to burn and/or melt, exposing the e-Cig's internal components that are hot.

The temperature sensor 110 may be included adjacent to or coupled with the heating element 111 to monitor the temperature inside the e-Cig 100. In order to accurately measure the temperature, the temperature sensor 110 must be small enough to fit inside the e-Cig 100 and be adjacent or coupled with the heating element 111 for accurate temperature measurement. In one embodiment, the temperature sensor 110 is a thermal fuse that switches off the current when the ambient temperature inside the e-Cig 100 reaches the rated temperature (i.e. a predetermined temperature) of the thermal fuse. The thermal fuse may be referred to as a thermal circuit breaker fuse. In an embodiment, the thermal circuit breaker fuse can be coupled in series with a switch that stops the power to the electronic circuit when the thermal circuit breaker fuse is broken.

In one embodiment, the thermal fuse may be a one-time use device such that when the thermal fuse is broken (the electric current in the e-Cig 100 is stopped), it prevents further usage of the cartridge (i.e. cartomizer) 113. In this case, the cartridge 113 is disposable, so a replacement cartridge 113 includes a new thermal fuse. In other words, the triggering of the thermal fuse prevents future usage of that cartridge 113.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments and changes may be made without departing from the scope of the disclosure, as defined by the appended claims. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

## Claims

1. An electronic cigarette (100) comprising:
a battery portion including a battery (106) configured to power the electronic cigarette (100); and
a cartridge (113) coupled with the battery portion, the cartridge including,
a heating element (111) that vaporizes a liquid; and
a temperature sensor (110) configured to measure a temperature within the electronic cigarette (100) during operation thereof and prevent further operation of the electronic cigarette (100) when the measured temperature exceeds a predetermined threshold, the temperature sensor (110) including a thermal fuse.

2. The electronic cigarette (100) of claim 1, wherein the cartridge (113) is disposable.

3. The electronic cigarette (100) of claim 1, wherein the thermal fuse includes a rated temperature at which a circuit supplying power to the heating element (111) within the cartridge (113) is broken.

4. The electronic cigarette (100) of claim 3, wherein the predetermined threshold is the rated temperature of the thermal fuse.

5. The electronic cigarette (100) of claim 1, wherein the cartridge (113) is interchangeable with different battery portions.

6. The electronic cigarette (100) of claim 1, wherein the battery portion further comprises:
a controller (102).

7. The electronic cigarette (100) of claim 6, wherein the controller (102) is electrically coupled with the temperature sensor (110) and the controller (102) is configured to receive an indication when the measured temperature exceeds the predetermined threshold.

8. The electronic cigarette (100) of claim 7, wherein the controller (102) is configured to stop the supply of power from the battery (106) to the heating element (111) upon receiving the indication from the temperature sensor (110).

9. The electronic cigarette (100) of claim 7, wherein the temperature sensor (110) is configured to provide a plurality of temperature measurements to the controller (102) such that different temperature measurements result in different amounts of shut off time for the supply of power from the battery (106).

10. The electronic cigarette (100) of claim 1, wherein the heating element (111) comprises:
a heating coil wrapped around a wick.

11. A method for electronic cigarette (100) operation comprising:
switching off power to an electronic cigarette (100) according to claim 1 when the ambient temperature exceeds a predetermined threshold temperature.

12. The method of claim 11, comprising:
breaking a circuit of a thermal fuse within the electronic cigarette (100) when an ambient temperature of the electronic cigarette (100) exceeds a rated temperature of the thermal fuse.

## Patentansprüche

1. Elektronische Zigarette (100), die Folgendes umfasst:
einen Batterieabschnitt, der eine Batterie (106) einschließt, die dafür konfiguriert ist, die elektronische Zigarette (100) zu speisen, und
eine Kartusche (113), die mit dem Batterieabschnitt verbunden ist, wobei die Kartusche Folgendes einschließt:
ein Heizelement (111), das eine Flüssigkeit verdampft, und
einen Temperatursensor (110), der dafür konfiguriert ist, eine Temperatur innerhalb der elektronischen Zigarette (100) während des Betriebs derselben zu messen und einen weiteren Betrieb der elektronischen Zigarette (100) zu verhindern, wenn die gemessene Temperatur eine vorherbestimmte Schwellentemperatur überschreitet, wobei der Temperatursensor (110) eine Thermosicherung einschließt.

2. Elektronische Zigarette (100) nach Anspruch 1, wobei die Kartusche (113) ein Einwegartikel ist.

3. Elektronische Zigarette (100) nach Anspruch 1, wobei die Thermosicherung eine Nenntemperatur einschließt, bei der ein Schaltkreis, der dem Heizelement (111) innerhalb der Kartusche (113) Energie zuführt, unterbrochen wird.

4. Elektronische Zigarette (100) nach Anspruch 3, wobei der vorherbestimmte Schwellenwert die Nenntemperatur der Thermosicherung ist.

5. Elektronische Zigarette (100) nach Anspruch 1, wobei die Kartusche (113) mit unterschiedlichen Batterieabschnitten austauschbar ist.

6. Elektronische Zigarette (100) nach Anspruch 1, wobei der Batterieabschnitt ferner eine Steuerung (102) umfasst.

7. Elektronische Zigarette (100) nach Anspruch 6, wobei die Steuerung (102) elektrisch mit dem Temperatursensor (110) verbunden ist und die Steuerung (102) dafür konfiguriert ist, eine Anzeige zu empfangen, wenn die gemessene Temperatur den vorherbestimmten Schwellenwert überschreitet.

8. Elektronische Zigarette (100) nach Anspruch 7, wobei die Steuerung (102) dafür konfiguriert ist, auf ein Empfangen der Anzeige von dem Temperatursensor (110) hin die Zufuhr von Energie von der Batterie (106) zu dem Heizelement (111) zu beenden.

9. Elektronische Zigarette (100) nach Anspruch 7, wobei der Temperatursensor (110) dafür konfiguriert ist, mehrere Temperaturmessungen für die Steuerung (102) bereitzustellen, so dass unterschiedliche Temperaturmessungen zu unterschiedlichen Ausmaßen von Abschaltzeiten für die Zufuhr von Energie von der Batterie (106) führen.

10. Elektronische Zigarette (100) nach Anspruch 1, wobei das Heizelement (111) ferner Folgendes eine Heizwendel umfasst, die um einen Docht gewickelt ist.

11. Verfahren zum Betrieb einer elektronischen Zigarette (100), das Folgendes umfasst:
Abschalten der Energie für eine elektronische Zigarette (100) nach Anspruch 1, wenn die Umgebungstemperatur eine vorherbestimmte Schwellentemperatur überschreitet.

12. Verfahren nach Anspruch 11, das Folgendes umfasst:
Unterbrechen eines Schaltkreises einer Thermosicherung innerhalb der elektronischen Zigarette (100), wenn eine Umgebungstemperatur der elektronischen Zigarette (100) eine Nenntemperatur der Thermosicherung überschreitet.

## Revendications

1. Cigarette électronique (100), comprenant :
une partie de batterie incluant une batterie (106) configurée pour alimenter la cigarette électronique (100) ; et
un cartomiseur (113) accouplée à la partie de batterie, le cartomiseur incluant :
un élément chauffant (111) qui vaporise un liquide ; et
un capteur de température (110) configuré pour mesurer une température dans la cigarette électronique (100) au cours de son fonctionnement et empêcher un fonctionnement ultérieur de la cigarette électronique (100), lorsque la température mesurée dépasse une valeur de seuil prédéterminée, le capteur de la température (110) incluant un fusible thermique.

2. Cigarette électronique (100) selon la revendication 1, dans laquelle le cartomiseur (113) est à usage unique.

3. Cigarette électronique (100) selon la revendication 1, dans laquelle le fusible thermique inclut une température nominale en présence de laquelle un circuit alimentant en énergie l'élément chauffant (111) dans le cartomiseur (113) est interrompu.

4. Cigarette électronique (100) selon la revendication 3, dans laquelle la valeur de seuil prédéterminée correspond à la température nominale du fusible thermique.

5. Cigarette électronique (100) selon la revendication 1, dans laquelle le cartomiseur (113) est interchangeable avec différentes parties de batterie.

6. Cigarette électronique (100) selon la revendication 1, dans laquelle la partie de batterie comprend en outre un moyen de commande (102).

7. Cigarette électronique (100) selon la revendication 6, dans laquelle le moyen de commande (102) est accouplé électriquement au capteur de température (110) et le moyen de commande (102) est configuré pour recevoir une indication lorsque la température mesurée dépasse une valeur de seuil prédéterminée.

8. Cigarette électronique (100) selon la revendication 7, dans laquelle le moyen de commande (102) est configuré pour arrêter l'alimentation en énergie de l'élément chauffant (111) à partir de la batterie (106) lors de la réception de l'indication transmise par le capteur de température (110).

9. Cigarette électronique (100) selon la revendication 7, dans laquelle le capteur de température (110) est configuré pour transmettre plusieurs mesures de la température au moyen de commande (102), de sorte que différentes mesures de la température entraînent des durées différentes du temps d'arrêt de l'alimentation en énergie à partir de la batterie (106).

10. Cigarette électronique (100) selon la revendication 1, dans laquelle l'élément chauffant (111) comprend un serpentin chauffant enroulé autour d'une mèche.

11. Procédé de fonctionnement d'une cigarette électronique (100), comprenant l'étape ci-dessous :
arrêt de l'alimentation d'une cigarette électronique (100) selon la revendication 1, lorsque la température ambiante dépasse une température de seuil prédéterminée.

12. Procédé selon la revendication 11, comprenant l'étape ci-dessous :
interruption d'un circuit d'un fusible thermique dans la cigarette électronique (100), lorsqu'une température ambiante de la cigarette électronique (100) dépasse une température nominale du fusible thermique.
